# EUROPEAN PATENT APPLICATION

(11) **EP 4 729 904 A1**
(43) Date of publication of application: **22.04.2026**
(21) Application number: 24206970.6
(22) Date of filing: 16.10.2024
(51) Int. Cl.: G01K 7/00, G01L 1/00, G01L 1/14, H01M 10/48

(54) **DUAL STRAIN AND TEMPERATURE SENSOR**

(71) Applicant: Advanced Material Development Limited, Surrey GU2 7YG (GB)
(72) Inventor: Dalton, Alan, Brighton, Sussex BN1 9RH (GB); Lynch, Peter, Brighton, Sussex BN1 9RH (GB); Ogilvie, Sean, Brighton, Sussex BN1 9RH (GB)
(74) Representative: Schlich

(57) **Abstract**

The present invention provides a temperature and strain sensor, the sensor comprising two electrodes and a polymeric matrix comprising an ionic liquid separating the electrodes, wherein the electrodes and polymeric matrix are all co-planar. Methods of using the sensors and methods for their manufacture are also described.

## Description

### Introduction

The present invention relates to a dual strain and temperature sensor, as well as methods for making said sensors and products incorporating the sensors.

### Background to the Invention

Batteries are a crucial energy storage technology in the modern world, with rechargeable batteries being used for an enormous variety of applications ranging from portable electronic devices to electric vehicles.

The performance of batteries can be affected by factors such as exposure to physical strain and temperature changes, which may occur during the normal charging-discharging cycles of a rechargeable battery. Therefore, the ability to measure battery strain and temperature changes in a battery management system can provide improved information regarding the state of charge and state of health of a battery system.

Safe management of Li-ion cells is becoming increasingly important as energy densities increase. Undesired side reactions from cell electrodes may evolve gases, which could lead to catastrophic failure of cells, including the puncturing of cells and runaway oxidation events (i.e. fires). Unexpected gas evolution events need to be monitored and controlled with the ability to alert battery management systems (BMS) quickly. Measuring and controlling individual cells' charging and discharging through better battery management systems is desirable for increased safety and public acceptance.

Thermal management of cells is also important for the efficient operation of transport vehicles within a wide range of ambient operation. Heating and cooling systems for batteries plays an important role in regulating charging and discharging and being able to measure and control at individual cell level enables optimal efficiencies to be achieved and the potential identification of 'hot spots' (see for example, Zhang et al., "A review on thermal management of lithium-ion batteries for electric vehicles", Energy (2022), vol. 238A, pp. 121652).

Some existing battery sensors are based on optical fibre sensing, including optical fibre grating, optical fibre interferometer, optical fibre evanescent wave, optical fibre photoluminescent and optical fibre scattering (see G. Han et al., Renewable and Sustainable Energy Reviews, (2021), vol. 150, pp. 111514).

However, optical fibre sensing provides many challenges including susceptibility to environmental conditions, limited sensitivity, and high energy consumption. Additionally, the fragility and high cost of materials used in current sensors based on optical fibre sensing along with complexities in their construction, pose an obstacle to the widespread adoption of these sensors. There may also be difficulties in interfacing a FBS (fibre bragg sensor) with a charge/discharge controlling management system. The need to connect all the individual sensors (including optical alignment and housing of lasers for each of the sensors) makes this technology too complicated for industrial adoption, even if it is acceptable for research and development purposes. It has also been reported that FBG's cannot always effectively decouple temperature and strain induced measurements (see Sensors (Basel). 2014 Apr; 14(4): 7394-7419). There is also the issue of the sensor perturbing the surroundings of the battery, as affixing a fibre structure on a flat substrate may cause issues of residual stress.

There therefore exists the need for further strain and temperature sensors for battery management systems, for example those in flat form factors that are suitable for integration at the point of manufacture.

In addition, sensors that are able to measure strain and temperature are envisaged as being useful for applications other than battery management. For example, such sensors may have uses as body-worn sensors, sensors for heating pipes/hoses and general composite structure monitoring, where temperature cycling is present (e.g. in aircraft, wind turbines, pressure vessels for the transfer or mixing of fluids, and balloons).

Therefore, further dual strain and temperature sensors for applications other than battery management systems are also required.

### Summary of the Invention

The inventors of the present application have developed a dual strain and temperature sensor making use of planar electrodes separated by a polymeric membrane containing an ionic liquid.

In a first aspect, the invention provides a temperature and strain sensor, the sensor comprising two electrodes and a polymeric matrix comprising an ionic liquid separating the electrodes, wherein the electrodes and polymeric matrix are all co-planar.

The impedance of the sensor varies in response to changes in temperature and physical strain. Accordingly, the invention provides a flat, direct-printed, two-terminal, multiparameter-readout sensor which is responsive to strain and temperature of the underlying substrate (e.g. a battery).

The sensor can be used in a wide variety of applications including in battery management systems, as well as in body-worn sensors, heating pipes and other composite structures where temperature cycling occurs (such as aircraft, wind turbines and balloons).

In a further aspect, the invention provides a method of simultaneously measuring strain and temperature using a sensor as described herein.

The sensors as described herein can be prepared by printing electrodes and filling the gaps between the electrodes with a polymeric matrix comprising an ionic liquid. Accordingly, in a further aspect, there is a provided a method of forming a sensor, the method comprising:
i) printing two electrodes on a substrate,
ii) filling the gaps between the electrodes with a polymeric matrix comprising an ionic liquid,
iii) providing a protective barrier layer over the electrodes and polymeric matrix.

### Detailed Description of the Invention

### Sensor Shape

The two electrodes are typically completely separated from each other by the polymeric matrix. In other words, the two electrodes are not in direct contact with each other at any position within the sensor.

It will be appreciated that linear electrodes, i.e. those extending in a single direction only, will only be able to accurately detect strain in a single direction. Therefore, preferably the electrodes have a non-linear shape to enable them to detect strain in 2 or more directions. To provide insensitivity to strain direction, the electrodes preferably have a non-linear form with equivalent material in a vertical direction (y-component) and a horizontal direction (x-component).

The electrodes may be shaped to form two interlocking, planar spirals. In this arrangement, each electrode is spiral-shaped, with one electrode fitting within the spaces between adjacent turns in the spiral of the other electrode.

The spirals may be circular spirals or polygonal spirals. Circular spirals are shaped to be a gradually tightening curve around a central point on a flat plane, such that its radius decreases along the length of the spiral. Polygonal spirals are parametric shapes that generate a spiralling open path from a starting to an ending radius, using linear sides, instead of curves. The polygonal spiral may be based on a polygon of 3 to 8 sides. Preferably, the polygon is based on the shape of a regular polygon. For example, the polygonal spiral may be a triangular spiral, a square spiral, a pentagonal spiral or a hexagonal spiral.

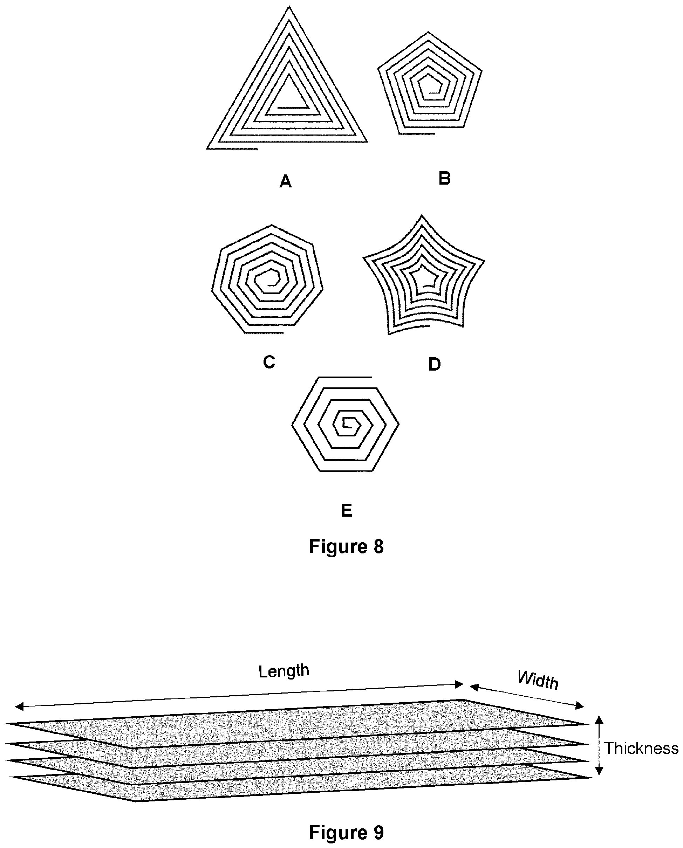

Examples of polygonal spiral shapes are shown in Figure 9.

The spiral may comprise 3 or more revolutions/winds, typically 5 or more revolutions/winds, for example 8 or more revolutions/winds.

The spirals typically have a consistent spacing of from 0.1 mm to 10 mm between each revolution/wind, such as from 0.25 mm to 7.5 mm, typically from 0.5 mm to 5 mm.

Alternatively, the electrodes may comprise a plurality of arranged sections/branches. Accordingly, rather than each electrode shape forming a single path, it may comprise one or more main ("trunk") sections and one or more sections ("branches") linked/connected at an angle within the plane of the sensor (preferably at an angle of 90°, i.e. perpendicularly) to main section. As noted above, preferably the surface area of the material in one direction is equal to the surface area of the material in the perpendicular direction such that the sensor measurements are independent of strain direction. In this arrangement, the electrodes are still spaced apart from each other by the polymeric matrix. The branch sections of the electrodes may be substantially rectangular in shape with these extending towards or in-between branch sections of the other electrode. In other words, the branches may be arranged in an alternating fashion, such that the branches of one electrode interdigitate with the branches of the other. An example of this arrangement is shown in Figure 11.

Optionally, the geometry and sizes of the electrodes and polymeric matrix components may vary based on the impedance contributions of each component. The geometry and sizes of the electrodes and polymeric matrix may be adjusted so that the impedance contribution of both components is the same or similar, resulting in equal contributions from both components to the strain and/or temperature response.

The geometries and sizes of the electrodes may be varied based on the relative conductivities of the electrodes and the polymeric matrix to ensure the relative impedance contribution from both components is similar.

Typically, the component with lower relative conductivity has a greater surface area to balance the impedance contributions of each component and ensure both components have the same impedance contribution.

The sensor is planar in nature in that has a uniform thickness across its length and width. Although the sensor can be applied to a flat underlying product, it may be flexible, meaning that it can be applied to a curved surface, while remaining planar in nature.

The sensor typically has a thickness of from 1 µm to 50µm, such as from 2µm to 30µm, typically from 5µm to 20µm. The uniform thickness of the sensor means that both the electrodes and the polymeric matrix have the same thickness both as each other and across the length and width of the sensor.

The sensor may typically have an area of up to 20cm², for example up to 15cm² or up to 10cm².

### Electrodes

The electrodes are formed from an electrically conductive material. Whilst the electrodes may be metallic, it is preferred that the electrodes are formed from conductive carbon nanomaterials.

The term "carbon nanomaterials" or "nanocarbon" as used herein refers to nanomaterials (i.e. materials having an average size from 1nm to 100nm in at least one dimension) that comprise or consist of carbon. Typically, the carbon nanomaterials comprise at least 90% or more by weight, preferably at least 95% or more by weight, for example 99% or more by weight of carbon. The term includes materials such as graphene, graphite nanoplatelets, single-walled carbon nanotubes, multi-walled carbon nanotubes, crystalline diamond, and diamond-like carbon (see the following ISO standard: ISO/TS 80004-3:2020).

The electrodes may comprise graphite nanoplatelets. The term "graphite nanoplatelets" as used herein (also referred to herein as "graphene nanoplatelets") refers to nanoparticles of graphite which consist of small stacks of graphene. The term graphite nanoplatelets refers to nanoplatelets having on average 20 or fewer layers, typically 15 layers or fewer, preferably 10 or fewer layers. Layer numbers can be determined by UV-vis spectroscopy (see C. Backes et al., "Spectroscopic metrics allow in-situ measurement of mean size and thickness of liquid-exfoliated graphene nanosheets", Nanoscale, 2016, doi: 10.1039/C5NR08047A).

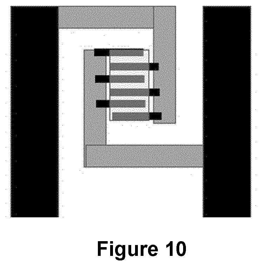

The nanoplatelets typically have an average thickness of less than 30nm, for example less than 20nm. The term "thickness" as used herein refers to the dimension of the nanoplatelets along the axis of stacking of the layers within the nanoplatelets. The terms "length" and "width" refer to the longer and shorter dimensions of the nanoplatelets along perpendicular axes in the plane of the sheets of the layered materials respectively (see Figure 10).

The nanoplatelets typically have an average length and/or width of 30nm or greater, preferably 50nm or greater or 100nm or greater. The nanoplatelets typically have an average length and/or width of 10µm or less, typically 3.0µm or less, for example 2.0µm or less, typically 1.5µm or less, preferably 1µm or less, for example 800nm or less. In some instances, dependent on specific exfoliation processes of these materials, graphite nanoplatelets have larger lateral dimensions that are greater than 1 µm and less than 50 µm. The number vs size distributions of these materials may be broad or narrow depending on the exfoliation technique employed and/or any subsequent size selection process.

The dimensions of the nanoplatelets can be measured using scanning or transmission electron microscopy. The nanoplatelets are typically only micron-sized in up to two dimensions (i.e. their length and width, with their thickness being significantly less than 1µm, for example less than 100nm). These dimensions are preferably measured by transmission electron microscopy.

The graphite nanoplatelets are typically present in the electrodes in an amount of from 10% (w/w) or from 20% or 30% (w/w), preferably from 50% (w/w), for example from 75% (w/w) and up to 100% (w/w) or up to 99% (w/w), preferably up to 95% (w/w), for example up to 90% (w/w).

The electrodes may also comprise an insulating material in order to tune their conductivity to assist with matching the impendence of the electrodes with the polymeric matrix. In one embodiment, the electrodes are formed from graphite nanoplatelets in combination with an insulative component. Although any insulator may be used, an insulator with a 2D-layered structure is preferable, for example boron nitride.

The term "boron nitride" as used herein refers to the most stable crystalline from of boron nitride, hexagonal boron nitride (h-BN), or graphitic boron nitride, as it is also known. The term "boron nitride" refers to a boron nitride structure which has the same space group and similar honeycomb lattice structures with comparable dimensions as graphite.

Hexagonal boron nitride (h-BN) is preferred as the insulative component of electrodes as it packs efficiently and thus readily mixes with graphite nanoplatelets due to their similar structures and isoelectronic nature. Thus h-BN can be more easily processed in combination with graphite nanoplatelets to form homogeneous electrodes, than other insulators which do not have a 2D-layered structure.

In one embodiment, the electrodes further comprise carbon nanotubes.

The carbon nanotubes may be single-walled carbon nanotubes or multi-walled carbon nanotubes, but preferably comprise or consist of single-walled carbon nanotubes. The carbon nanotubes may be metallic carbon nanotubes or semiconductor carbon nanotubes. The carbon nanotubes typically have an outer mean diameter of from 1nm to 5nm, preferably from 1nm to 2nm (as determined by transmission electron microscopy) and may have a length of greater than 3µm, typically greater than 5µm, for example greater than 10 µm or greater than 15µm. Whereas the nanoplatelets described below are micron-sized in two dimensions, carbon nanotubes are only micron-sized in a single dimension (i.e. along their length). When the electrodes comprise a mixture of carbon nanotubes and graphite nanoplatelets, the carbon nanotubes may be present in the electrodes described herein in a weight ratio relative to the amount of graphite nanoplatelets of greater than 0.05:1 (carbon nanotubes:graphite nanoplatelets), preferably greater than 0.1:1 and in a ratio of up to 0.3:1, suitably up to 0.2:1, preferably up to 0.15:1.

For example, the carbon nanotubes are typically present in the electrodes in a weight ratio relative to the amount of graphite nanoplatelets of from 0.05:1 to 0.2:1 (carbon nanotubes:graphite nanoplatelets), preferably in a ratio of from 0.1:1 to 0.15:1.

Alternatively, the quantity of carbon nanotubes in the electrodes may be defined relative to the weight of the total composition. The carbon nanotubes are typically present in the composition of the electrodes in an amount of from 1% (w/w), preferably from 2% (w/w), for example from 5% (w/w) and up to 15% (w/w), preferably up to 10% (w/w), for example up to 7% (w/w).

The electrodes are typically deposited onto a substrate from a liquid composition (or "ink"). For example, liquid compositions comprising the carbon nanomaterials and a solvent (and optionally other thickening agents, binders and other additivities described below) can be sprayed or printed onto the substrate.

The solvent may be an aqueous or non-aqueous solvent. However, the solvent preferably is or comprises water (necessary for hydrogel formation). Alternatively, the solvent may be a dipolar aprotic solvent. Examples of such dipolar aprotic solvents include cyclopentanone, cyclohexanone, N-methylpyrrolidone (NMP), dimethylformamide (DMF), dimethylsulphoxide (DMSO), dimethylacetamide (DMAc), sulpholane, dihydrolevoglucosenone (Cyrene) and lactones, such as gamma-valerolactone. When gamma-valerolactone is present, it may be present in the liquid compositions in amounts of from 1% to 10% (w/w), for example up to 5% (w/w) or from 5% (w/w) to 10% (w/w), preferably from 6% to 10% (w/w).

The carbon nanomaterials in the liquid composition may comprise graphite nanoplatelets, carbon nanotubes or a mixture thereof. Carbon nanomaterials are typically present in the liquid compositions in an amount of from 1% by weight, for example from 5% and up to 40% by weight, preferably from 10% and up to 35% by weight, for example from 20% and up to 30% by weight

The liquid compositions (containing carbon nanomaterials) may also include a thickening agent (which may also act as gelification agents) to increase the viscosity of the compositions. The increased viscosity ensures that the compositions are suitable for printing and also reduces the tendency of the carbon nanomaterials to flocculate from suspension.

The thickening agent is preferably a hydrogel-forming thickening agent. The formation of a hydrogel matrix containing carbon nanomaterials (for example, graphite nanoplatelets) results in a highly electrically conductive ink. The hydrogel-forming thickening agents are generally hydrophilic polymer chains which form a colloidal gel through hydrogen-bonding in water.

Examples of suitable thickening agents include:
- cellulose derivatives, such as carboxymethyl cellulose (CMC), methyl cellulose, hydroxy ethyl cellulose and carboxy ethyl cellulose, and salts thereof (such as sodium salts thereof);
- polymers such as polyethylene oxide (PEO), polypropylene oxide (PPO); polyanaline (PANI), polyvinylpyrrolidone (PVP), polyvinyl alcohol (PVA) and poly *N*-isopropylacrylamide (PNIPAAm);
- cyclodextrins;
- natural gelification agents such as xanthan gum, gelatine, glycerol, alginates, chitosan;
- inorganic silicas and clays such as bentonite, montmorillonites, laponite, nano-silica and titania; and
- filamentous or rod-like materials, for example those having an aspect ratio of greater than 100 (e.g. carbon nanotubes).

In a preferred embodiment, the thickening agent is a cellulose derivative, such as carboxymethyl cellulose. The term cellulose derivate as used herein refers to chemical derivatives of cellulose formed by functionalisation of some or all of the hydroxyl groups present in cellulose (for example via etherification or esterification reactions). Derivatives can be formed by incorporation of one or more or all of the carboxy, hydroxy, methyl, ethyl and/or propyl groups. Examples of cellulose derivatives include hydroxypropyl methylcellulose, hydroxypropyl cellulose, methyl ethyl cellulose, methyl cellulose and carboxymethylcellulose or a combination thereof, as well as cellulose itself. CMC is available in several forms (e.g. varying by the degree of substitution and function) and can be crosslinked with several chemical agents either covalently or through hydrogen bonding networks with other agents to impart new properties which can be tailored according to requirements (Gels 2018, 4, 54; doi:10.3390/gels4020054).

Cellulose derivatives readily form hydrogels which are utilised in many industrial applications. These materials may also act as surface-active agents which stabilise nanocarbon materials in aqueous solvents. Hydrogels exhibit ideal thixotropic behaviour due to their extended hydrogen bonding or supramolecular network formation behaviour. These networks serve to provide long-range ordering to improve rheological behaviour.

The total concentration of the thickening agents may be in the range of 0.5% to 10% by weight of the total liquid composition (including the solvent), for example from 1% to 5% by weight, or from 2% to 4% by weight of the total liquid composition.

The thickening agent increases the viscosity of the composition and it is envisaged that it also enables the carbon nanotubes to form a pre-ordered supramolecular network, which increases the conductivity of electrodes printed from the composition.

The viscosity of the composition is important to ensure that it can be printed to form a film. In addition, the composition should be viscous enough to prevent flocculation of the carbon nanomaterials within the composition. The precise viscosity will of course depend on the application of the composition (and the resulting film). The thickening agent also ensures that the inks have a viscosity suitable for printing, e.g. screen printing. The inks suitable for screen-printing are typically thixotropic and therefore their viscosity is dependent on shear rate. The liquid compositions (containing the carbon nanotubes and optionally additional carbon nanomaterials) may have a viscosity of from 100 to 1000 Pa.s at a shear rate of 0.1/s and/or may have a viscosity of from 1 to 10 at a shear rate of 100/s.

The liquid compositions may also include one or more surfactants. The surfactants are typically non-ionic surfactants. Examples of suitable non-ionic surfactants include polyethylene oxide-based (PEO) surfactants (e.g. Triton X-100), polypropylene oxide-based (PPO) surfactants, cyclodextrins and polyvinyl pyrrolidone (PVP) surfactants. However, ionic surfactants, such as sodium cholate or sulphate-based surfactants (such as sodium dodecyl sulphate) may also be used.

The total concentration of the surfactants may be in the range of 1% to 10% or 2.5% to 7.5% by weight of the total composition (including the solvent), for example from 4% to 6% by weight of the total composition.

The compositions may also comprise one or more solvents and or adhesives in order to improve adhesion of the dried film (formed by printing the ink) to a substrate. The nature and combinations of adhesives will of course be dependent on the substrate.

The compositions may also comprise one or more cross-linking agents in order to improve the rheological parameters of the ink and/or properties of the resulting films. This may include a wide range of functional organic acids or bases such as ascorbic acid. Examples of further cross-linking agents include di- and tri-carboxylic acids, such as glutaric acid and trimesic acid. This crosslinking serves to stabilise films from rapid redissolution and the effects of ambient humidity on conductivity.

The compositions may also comprise one or more humectants to aid the printability of the inks within industrial processes. In aqueous-based compositions, the addition of urea, glycerin, or glycols such as polypropylene glycol slows the ink drying process such that constant and repeatable printing can be obtained.

In addition, the compositions may further comprise a setting (cross-linking) agent, which is a material that cures upon exposure to heat or radiation to cure and set the liquid ink compositions into a solid film. These include photocurable monomers or infra-red activated agents, e.g. epoxides (which may undergo ring opening reactions), aldehydes or acids (which may undergo esterification reactions) such as citric acid.

Alternatively, films formed with binders containing mono-valent ions, such as sodium carboxymethyl cellulose, may be treated with aqueous solutions of bi, tri or tetra valent ionic salts such as Calcium (II) Chloride or Iron (III) Sulphate to form ionically-crosslinked insoluble films by a process of ion exchange.

Preferably the device comprises a pair of electrodes. The electrodes may both comprise carbon nanotubes (and optionally additional carbon nanomaterials). Alternatively, when more than one electrode is present, the electrodes may be formed from different materials. For example, a first electrode may comprise carbon nanotubes and a second electrode may be a metallic electrode. In this arrangement, typically, the electrode adjacent the substrate is a non-carbon nanomaterial-containing electrode.

The device preferably comprises a pair of electrodes comprising carbon nanotubes (and optionally further carbon nanomaterials, such as graphite nanoplatelets). However, devices of the invention may comprise a first carbon-containing electrode and a second electrode, which has a different composition from the first electrode. For example, the second electrode may be a metallic electrode, such as a gold, silver or copper electrode.

### Polymeric Matrix

Separating the electrodes is a polymeric matrix comprising an ionic liquid.

The ionic liquid is preferably a room-temperature ionic liquid. Room temperature ionic liquids (RTIL) are a class of liquids with a low melting point that allows conductivity due to their ionic nature. The ionic liquid preferably has an electrochemical window of (plus/minus) 4V or greater, for example 4.5V or greater.

The ionic liquid may be introduced or infused into the polymeric matrix either during or after its production.

In some embodiments, the polymeric matrix is infused with the ionic liquid by first forming a porous polymeric matrix and then applying (e.g. soaking) the ionic liquid into the membrane.

Alternatively, the ionic liquid-infused membrane comprises a solid co-cast film of a suitable polymer with an ionic liquid commonly known as a solid polymer electrolyte. To prepare such solid polymer electrolytes, a dielectric polymer and the ionic liquid are dissolved in an appropriate solvent, in which they are both soluble (for example polar, aprotic solvents, such as acetone, DMF or NMP) and then the solvent is removed to form the polymeric matrix infused with the ionic liquid.

The polymer is typically present in a weight ratio relative to the amount of ionic liquid of from 1.5:1 to 0.5:1, preferably in a ratio of 1.25:1 to 0.75:1.

The polymeric permeable membrane is a dielectric material and is therefore electrically insulating. The polymeric membrane is also capable of holding an ionic liquid (in a similar manner to a capacitor or battery device). For example, the polymeric membrane may comprise polyethylene, polypropylene, polyvinylidene fluoride (PVDF), polyimide, cellulose, a cellulose derivative, or a mixture thereof. In preferred embodiments, the polymeric membrane is a polyethylene (PE) membrane, a polypropylene (PP) membrane or a PE/PP membrane. Preferred polymers for use in the sensors include polyvinylidene fluoride, hexafluoropropylene and poly(vinylidene fluoride-co-hexafluoropropylene).

The solid polymer electrolyte may be solvent cast directly onto a substrate, onto which the electrodes have already been deposited, in the gaps/spaces between the electrodes on the substrate. As the devices described herein may be exposed to the environment in use, they should be able to be operated sufficiently in ambient conditions. Water present in the air is one possible source of detrimental effects due to the low potential window of water to electrolysis (1.23V) as well as material interaction considerations. Accordingly, the ionic liquids are preferably hydrophobic ionic liquids. However, it is also possible for the electrolyte to comprise salts and acids that are commonly used in gel electrolytes (such as H₂SO₄, LiClO₄ and Na₂SO₄). Examples of suitable ionic liquids for use in the devices described herein include those comprising cations formed from:
- quaternary ammonium compounds (such as diethylmethyl(2-methoxyethyl)ammonium salts);
- imidazolium compounds (such as 1-ethyl-3-methylimidazlium, 1-butyl-3-methylimidazlum and 1-octyl-3-methylimidazlum);
- pyrrolidinium compounds (such as 1-propyl-1-methylpyrrolidinium); and
- lithium ions.

Suitable anions include tetrafluoroborate (BF₄⁻), hexafluorophosphate (PF₆⁻), bis(trifluoromethylsulfonyl)imides, trifluoromethanesulfonate and trifluoroacetic acid.

Accordingly, suitable ionic liquids include diethylmethyl(2-methoxyethyl)ammonium bis(trifluoromethylsulfonyl)imide ([DEME][TFSI]) and [DEME][BF₄], as well as 1-ethyl-3-methylimidazlium salts, e.g. EMI-BF₄ and [EMI][TFSI] and the corresponding 1-butyl-3-methylimidazlum salt. Alternatively, the ionic liquid may be a lithium-based ionic liquid (i.e. an ionic liquid wherein the cation is Li⁺), for example LiClO₄ or Li[TFSI].

### Substrate and Encapsulation Layer

The electrodes and polymeric matrix are typically deposited on and supported by a substrate. The substrate may be comprised of a rigid or flexible planar material which may comprise a continuous organic polymer, silicate based glass or a conductive metallic sheet.

The sensors may also be protected from ambient moisture ingress using a top encapsulation layer atop the device. This encapsulation layer acts as a barrier and may comprise one or more layers of continuous material. The protective encapsulation layer may be polymeric in nature. The protective layer may prevent water vapour and/or oxygen molecules from diffusing into the sensor (i.e. to come into contact with the electrodes), which reduces electrode lifetimes by facilitating unwanted chemical reactions. This layer is affixed onto the sensor and then sealed for operation.

Such encapsulation layers may be formed from suitable barrier materials with high thermal conductivity, flexibility and low permeability to gas or moisture such as polyethylene terephthalate (PET), high-density polyethylene (HDPE) or parylene.

### Detection

The sensors of the invention are typically used as sensors in electrical impedance spectroscopy. As discussed above, the sensor can simultaneously measure strain (through changes in impedance phase) and temperature (though changes in impedance magnitude).

Accordingly, the invention also provides a sensing system comprising a sensor of the invention in electronic communication with an electrical impedance spectroscope.

The electrical impedance spectroscope includes a microprocessor for providing an excitation current through the sensor and/or measuring the impedance of the sensor. Alternatively, the spectroscope can be replaced with a specialist microcontroller or integrated PCB which performs the same function as the microprocessor in the spectroscope.

The microprocessor may be connected to or in electronic communication with an electronic controller (e.g. a computer system) which can analyse and interpret the measured impedance and decouple this measurement to provide strain and temperature readings. Such mathematical methods such as Equivalent Circuit Modelling, whereby cell impedance is analytically parameterised in terms of electrical circuit elements, are known to those skilled in the art (see for example N Meddings et al., "Application of electrochemical impedance spectroscopy to commercial Li-ion cells: A review", J. Power Sources, 2020, vol. 480, pp. 228742).

In use, the electronic controller can be calibrated using differential image correlation and a thermocouple, in order to provide a correlation between the changes in impedance measured by the sensing system and "real-world" changes in temperature and strain.

The electronic controller may cause an output based on the calculated strain and temperature measurements. This may simply be indicated the measurements to a user via a visual display. However, it may also cause an output which causes a change in the object to which the sensor is attached. For example, in the application of battery management, the electronic controller can be electronically connected to a battery management controller such that the strain and temperature measurement outputs of the electronic controller can be used as input parameters to the battery management controller in order to alter the charging profile of the battery.

Accordingly, the invention provides a sensor as described herein connected to or in electronic communication with an electrical impedance spectroscope and optionally an electronic controller.

It will be appreciated that multiple sensors could be connected to the same spectroscope and/or electronic controller. Therefore, the invention also provides two or more sensors as described herein each connected to or in electronic communication with a single electrical impedance spectroscope and optionally a single electronic controller. The multiple sensors may be all attached to the same product (whose strain/temperature is being measured) or to different products for simultaneous measurement. As described herein, the products may be batteries, vessels or balloons, to name a few.

### Methods of Manufacture

In a further aspect, the invention provides a method of forming a sensor (e.g. a sensor as described herein), the method comprising:
i) depositing two electrodes on a substrate; and
ii) filling the gaps on the substrate between the electrodes with a polymeric matrix comprising an ionic liquid.

The electrodes, substrate, polymeric matrix and ionic liquid may have the features and properties described above in relation to the sensors of the invention.

The polymeric matrix comprising the ionic liquid may be co-cast (i.e. a mixture of the monomers forming the polymeric matrix and the ionic liquid are deposited together and then cured/set by polymerisation of the monomers). Alternatively, the polymeric matrix may be deposited onto the substrate and the ionic liquid may be subsequently infused into the polymeric structure. Impregnation steps may be conducted by applying the ionic liquid to the surface of the polymeric matrix and applying a vacuum.

The electrodes may be deposited from an ink comprising carbon nanomaterials (as discussed above).

The electrode ink and the polymeric matrix and ionic liquid may be deposited using a number of techniques, including printing and spraying (through a mask template). A wide variety of printing techniques can be used including screen printing, flexographic, offset lithographic, slot-die coating, doctor blade coating or inkjet printing.

The methods above may also comprise the step of applying a protective encapsulation layer (as described above) to the polymeric matrixes.

The invention also provides sensors obtained according to the methods described herein.

### Uses/Applications

The invention also provides a method of simultaneously measuring changes in strain and temperature of an object, the method comprising applying a sensor as described herein onto a surface of the substrate and measuring the impedance of the sensor.

The invention can be used in a wide range of applications where measurement of strain and temperature is important, particularly where temperature cycling is relevant. Examples of suitable applications include in battery monitoring systems, body-worn sensors, heating pipes/tubes, wind turbines and in vehicles such as aircraft and balloons.

Multiple sensors may be printed in series to allow the sensors to measure changes in strain and temperature of an object with large surface areas. Measurements quantified by the sensors in series can be averaged to give an overall view of the temperature and strain of the whole object.

### Brief Description of the Drawings

Figure 1 is a photograph of a sensor according to one embodiment of the invention, with dimensions shown.
Figure 2 is a graph showing the magnitude and phase signal as a function of temperature for sensors on an aluminium polymer foil, as described in Example 2.
Figure 3 is a graph showing the magnitude and phase signal during a temperature ramp with periodic manual flexing to illustrate strain response, as described in Example 2.
Figure 4 is a graph showing the thermocouple temperature and DIC strain for *in operando* cycling of the pouch cell, as described in Example 3.
Figure 5 is a strain-temperature phase diagram for a pouch cell, as described in Example 3.
Figure 6 depicts a graph showing the relationship between cell strain, cell temperature magnitude, and phase signal as a function of time for sensors on a pouch battery, as described in Example 3.
Figure 7 depicts a graph showing the cell temperature, cell voltage, sensor strain (%), strain magnitude and phase as a function of time for sensors on a pouch cell, as described in Example 3, over five typical charge-discharge cell cycles.
Figure 8 shows examples of polygonal spiral shapes.
Figure 9 is a schematic diagram showing the respective width, length and thickness of layered nanoplatelets.
Figure 10 is a schematic diagram showing a sensor according to another embodiment of the invention.

### Examples

### Example 1 - Manufacture of Dual Sensor

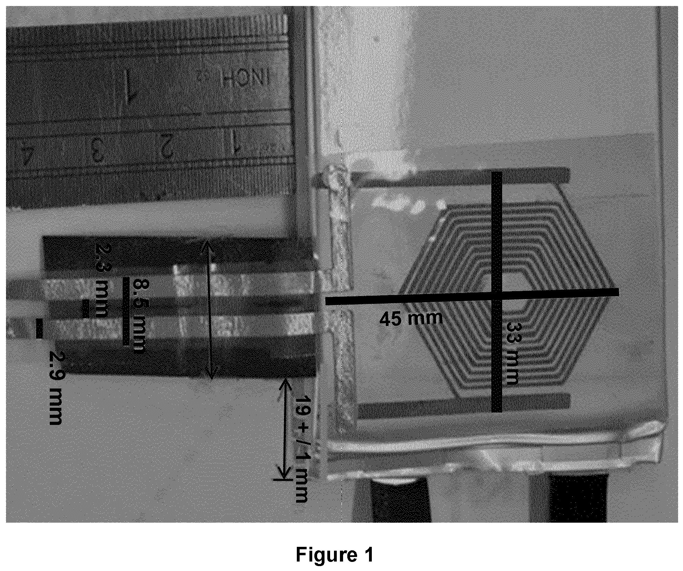

A graphite nanoplatelet-based strain-sensitive element in an isotropic-strain hexagonal spiral pattern with the two electrodes bridged by a gel electrolyte, as shown in Figure 1 was prepared.

To prepare the electrodes, an ink was prepared from 30 wt% graphite nanoplatelets (having average lateral dimensions of 1-2µm and layer number of around 20) 65 wt% in water with 5 wt% sodium cholate.

The graphite nanoplatelet dispersion was diluted by a factor of 10 in deionised water and sonicated in a bath for 10 minutes to form a sprayable ink. The ink was then sprayed with an airbrush at 3 bar at a distance of 15 cm through a 20 appropriate stencil to form a graphite nanoplatelet-containing electrode layer. This was done on a hotplate at 90°C.

The electrodes were printed in a hexagonal spiral shape, as shown in Figure 1 (or alternatively Figure 9E). The electrodes had a width of 0.5 mm. One of the electrodes was comprised of 5 revolutions and the other of 6 revolutions. The overall sensor had dimensions of 45mm by 33mm with a thickness of 30 µm.

A polymeric matrix was formed between the gaps in the electrodes on the substrate by co-casting poly(vinylidene fluoride-co-hexafluoropropylene) (PVDF-HFP) with the ionic liquid [EMI][TMSI] to form a membrane having a thickness of 10µm. To achieve this, a solid electrolyte precursor liquid comprising 12.5% (w/w) PVDF-HFP, 12.5% (w/w) [EMI][TFSI] and 75% (w/w) of acetone was dropcast at 200µL per cm² onto the substrate, in between the electrodes. The solvent was allowed to evaporate to leave a membrane comprising a 1:1 ratio of [EMI][TSFI] and PVDF-HDP.

The integration of both elements (the printed spiral electrolyte and polymeric matrix comprising the ionic liquid) yielded a device with sufficient phase in its impedance spectra to provide a non-zero secondary parameter to implement the proposed two-terminal readout of strain and temperature, as described in the further examples below.

### Example 2 - Testing of Sensor

The sensor made by the method in Example 1 was tested to study its change in impedance when subjected to changes in temperature and strain.

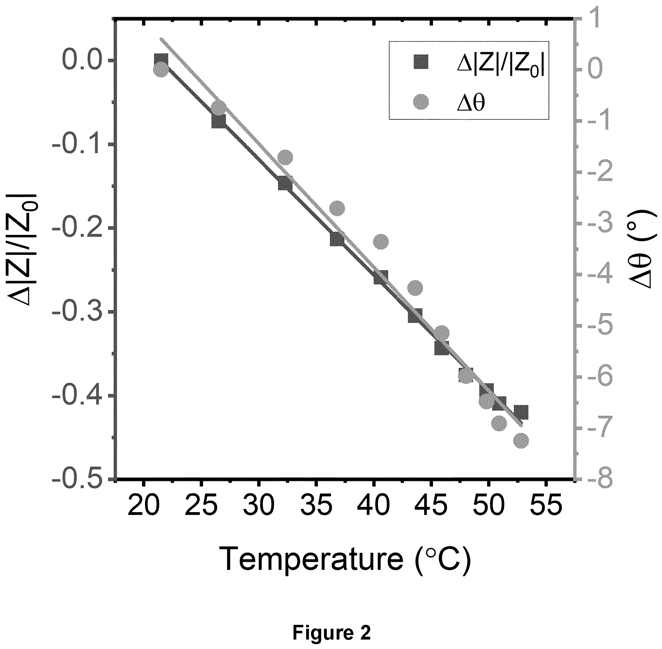

Figure 2 shows the response of the changes in magnitude (*Δ*|*Z*|/|*Z*₀| = |*Z*|/|*Z*₀| - 1) and phase (*Δθ* = *θ* - *θ*₀) of the impedance at 100 kHz to temperature upon heating on a hotplate. Note that the magnitude signal used is relative change *Δ*|*Z*|/|*Z*₀|, normalised to the baseline value |*Z*₀|, since this is not a bounded quantity but relative changes are expected to be robust (as is well-known for DC strain sensors).

By contrast, calibration used the phase signal as an absolute change *Δθ* since, phase is a physically-bounded quantity (and typically -60° to -30°), indicative of the equivalent AC circuit, so it is expected that changes in current flow will be comparatively independent of the baseline value.

As shown in Figure 2, the magnitude signal decreases upon heating, intuitively, as the conductivity of both the graphite nanoplatelet-containing electrodes and the electrolyte increase. Similarly, the phase decreases (becomes more negative) and both signals exhibit excellent linear response to applied temperature.

This allows for a strain-independent calibration of the sensor response to temperature and sensitivities of magnitude and phase signal to temperature of - 0.014/°C and -0.24°/°C respectively, with intercepts of these linear fits simply an offset based on the baseline temperature.

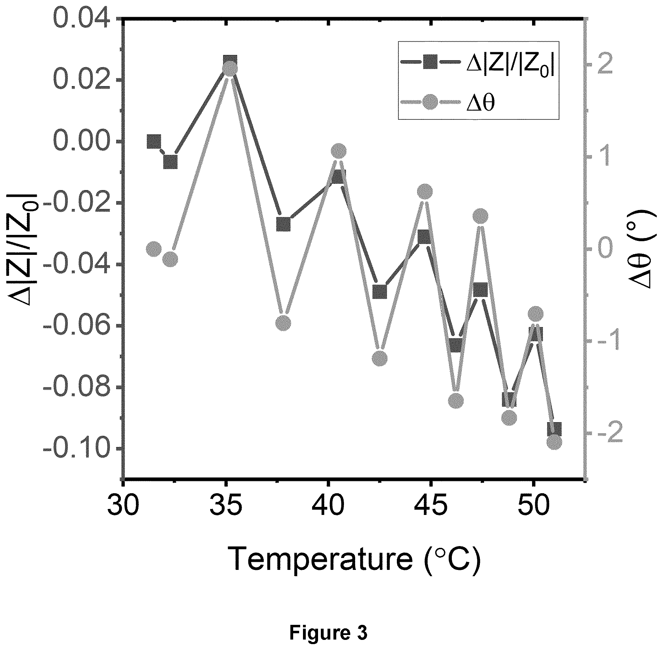

In addition to these temperature measurements, measurements were performed under simple manual flexing to determine the relative response to applied strain. Figure 3 shows the analysis of an experiment where the sensors were subject to a heating ramp while also undergoing periodic flexing. Importantly, while the overall trend is that the magnitude and phase signals continue to decrease with temperature, the sensitivity to strain is clearly indicated by the five maxima superimposed on the temperature-dependent trend.

This is particularly significant because it shows the strain response to be opposite in sign to the temperature response, *i.e*. the magnitude and phase signals increase under strain and decrease under temperature, presenting a route to decoupling strain and temperature responses.

### Example 3 - Testing of Sensor on a Battery

The sensor made by the method of Example 1 was applied to a pouch cell battery in order to demonstrate the ability of the sensor to detect changes in strain and temperature during charging and discharging of the cell.

A series of Differential Image Contrast (DIC) measurements were taken to allow for optical measurement of strain on the pouch cell surface under a range of conditions including heating and charge-discharge cycling.

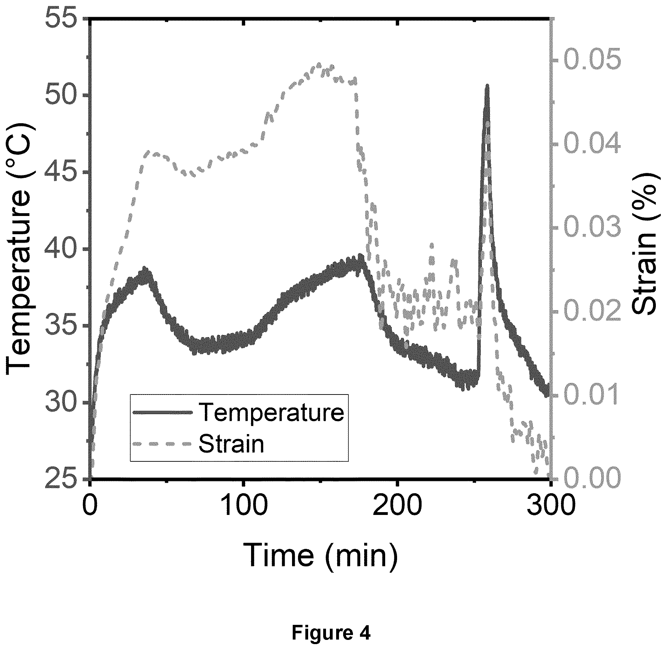

Figure 4 shows both DIC strain and thermocouple temperature during a typical charge-discharge profile. This illustrates behaviours such as the strain broadly tracking the temperature profile during charging (peaks at 40 min and 180 min) as a result of thermal expansion of the cell. In addition, on discharging, while the temperature increases significantly, the strain remains below the charged level as contraction during discharge dominates over further thermal expansion.

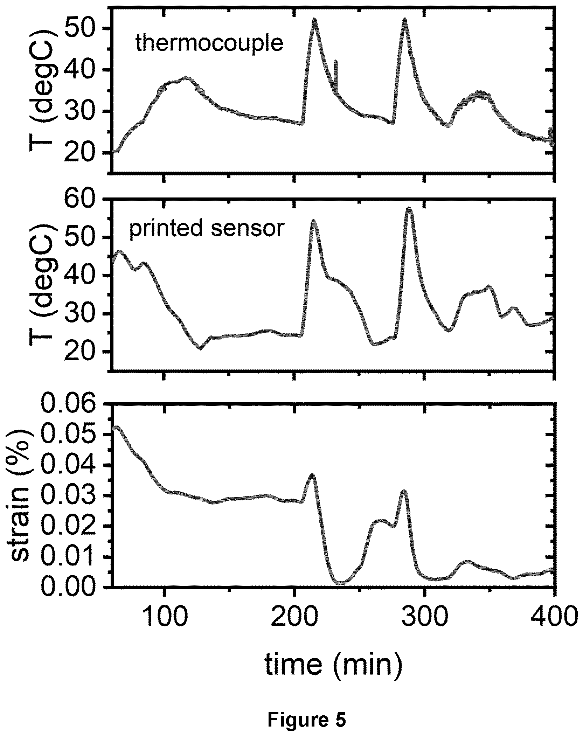

Following calibration, the temperature and strain measurements of a pouch cell during a charging-discharging cycle were measured and compared with an independent thermocouple readout. Figure 5 shows the temperature response extracted from the magnitude signal is in excellent agreement with the thermocouple readout, indicating that accurate temperature determination from two-parameter impedance measurement should be achievable.

### Example 4 - Sensor Testing under Temperature Ramp Conditions

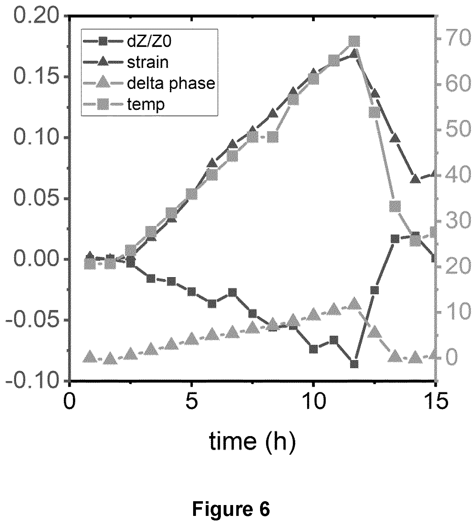

Figure 6 shows the sensor response to temperature-only, in the absence of cell charging. A LiPO₄ pouch cell battery cell with a sensor as made by the method of Example 1, printed thereon was tested under temperature ramp conditions from 20 to 70 °C at open cell voltage.

In Figure 6 cell strain, measured using Differential Image Contrast (DIC), was shown to follow cell temperature, measured via a thermocouple.

The sensor impedance (ΔZ/Z0) showed a strong negative correlation with both cell temperature and strain while the sensor phase angle showed a strong positive correlation with both cell temperature and strain. This illustrates that the sensor response (Δθ and θZ/Z0) closely tracked cell temperature and strain, highlighting that the sensor possesses good sensitivity to temperature and strain.

### Example 5 - Sensor Testing under Cell Cycling Conditions

The sensor made by the method of Example 1 was further applied to a LiPO₄ pouch cell battery to demonstrate the ability of the sensor to detect changes in strain and temperature during charging and discharging of the cell.

Following calibration of the DIC cameras using pouch cell materials, sensor impedance was measured over the course of five symmetric cell cycles. Full in-operando analysis of the pouch cell using electrochemical impedance spectroscopy (EIS), DIC and temperature was performed.

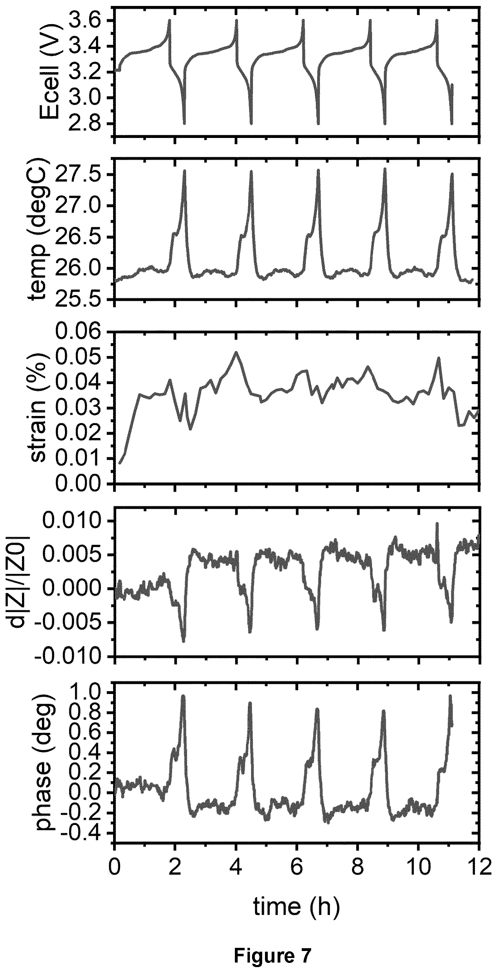

Figure 7 shows the cell temperature, cell voltage and sensor phase angle over five typical charge-discharge cell cycles. The results of this analysis, highlight a systematic trend between temperature (red), cell cycling (black) and sensor response (blue).

This illustrates that sensor phase readout provides an accurate method of tracking cell temperature during charge and discharge events. The correlation between sensor phase angle, cell temperature and cell voltage are most clearly illustrated in Figure 8 which shows an expanded view of the charge-discharge cycle at 4.5h to 6.75h from Figure 7.

Figure 8 shows the sensor phase angle response tracks the cell temperature which increases as cell discharge occurs, this change in sensor phase angle can be attributed to thermal expansion of the cell during cell discharge. Thus, the sensor phase angle can be used to accurately track cell heating on charge/discharge events.

## Claims

**1.** A temperature and strain sensor, the sensor comprising two electrodes and a polymeric matrix comprising an ionic liquid separating the electrodes, wherein the electrodes and polymeric matrix are all co-planar.

**2.** A sensor according to claim 1 wherein the electrodes comprise carbon nanomaterials (e.g. carbon nanoplatelets and/or carbon nanotubes).

**3.** A sensor according to claim 2 wherein the electrodes comprise carbon nanoplatelets in an amount of at least 10% (w/w).

**5.** A sensor according to any one of claims 2 to 4 wherein the carbon nanomaterials are carbon nanoplatelets having a thickness of 20nm or less and/or are carbon nanotubes having a length of 1µm or greater.

**6.** A sensor according to any one of claims 1 to 5 wherein the two electrodes are completely separated from each other by the polymeric matrix.

**7.** A sensor according to any one of claims 1 to 6 wherein the ionic liquid is selected from [DEME][TFSI], [DEME][BF4], EMI-BF₄, [EMI][TFSI], LiClO₄, H₂SO₄ or Li[TFSI].

**8.** A sensor according to any one of claims 1 to 7 wherein the electrodes have a non-linear shape.

**9.** A sensor according to any one of claim 8 wherein the electrodes are shaped to form two interlocking, planar spirals.

**10.** A sensor according to claim 9 wherein the spirals are circular spirals or polygonal spirals.

**11.** A sensor according to claim 9 or claim 10 wherein each spiral has 3 or more revolutions/winds.

**12.** A sensor according to any one of claims 1 to 11 wherein the sensor is a sensor for a battery.

**13.** A battery comprising one or more cells, a casing, and a sensor according to any one of claims 1 to 12 affixed to the casing.

**14.** A method of simultaneously measuring strain and temperature using a sensor according to any of claims 1 to 12, optionally in which strain is simultaneously measured in two or more directions.

**15.** A method of forming a sensor (e.g. a sensor according to any one of claims 1 to 12), the method comprising:
i) depositing two electrodes on a substrate; and
ii) filling the gaps on the substrate between the electrodes with a polymeric matrix comprising an ionic liquid; and optionally
iii) providing a protective barrier layer over the electrodes and polymeric matrix.
